# EUROPÄISCHE PATENTANMELDUNG

(11) **EP 4 789 750 A1**
(43) Veröffentlichungstag der Anmeldung: **12.08.2026**
(21) Anmeldenummer: 26157117.8
(22) Anmeldetag: 09.02.2026
(51) Int. Cl.: B01D 53/14, C01B 13/00, G01J 3/00, G01N 21/31, G01N 21/55

(54) **TRANSPORTSTRECKENABSCHNITT UND TRANSPORTSTRECKE**

(30) Priorität: 11.02.2025 DE 102025105063
(71) Anmelder: ionysis GmbH, 79110 Freiburg (DE)
(72) Erfinder: Tutsch, Leonard, 79110 Freiburg (DE); Büchler, Andreas, 79110 Freiburg (DE)
(74) Vertreter: Kilian Kilian & Partner mbB

(57) **Zusammenfassung**

Transportstreckenabschnitt (1) für den Transport und zur Untersuchung einer Polymerelektrolytmembran (2, 21), insbesondere einer Kohlenwasserstoff-Polymerelektrolytmembran, umfassend ein Transportelement (3), das eingerichtet ist, die Polymerelektrolytmembran (2, 21) zu transportieren, und eine Transmissionslichtuntersuchungseinrichtung, die zur Untersuchung der transportierten Polymerelektrolytmembran (2, 21) an einer Position, die die Polymerelektrolytmembran (2, 21) beim bestimmungsgemäßen Transport durchläuft, zur Auflösung von Defektstellen (5) der Polymerelektrolytmembran (2, 21) mittels durch die Polymerelektrolytmembran (2, 21) transmittierten Lichts angeordnet ist, wobei die Transmissionslichtuntersuchungseinrichtung eingerichtet ist, die Untersuchung der Polymerelektrolytmembran (2, 21) basierend auf Licht mit einem bestimmten Lichtspektrum durchzuführen, wobei das Lichtspektrum des Lichts in Bezug auf ein Transmissionsverhalten der zu untersuchenden Polymerelektrolytmembran (2, 21) Wellenlängen eines Untersuchungs-Wellenlängenbereichs, für den die Polymerelektrolytmembran eine verringerte Transmission aufweist, beinhaltet und zumindest eine Intensität von Wellenlängen eines Transmissions-Wellenlängenbereichs, für den die Polymerelektrolytmembran eine hohe Transmission aufweist, reduziert ist.

## Beschreibung

Die Erfindung betrifft einen Transportstreckenabschnitt für den Transport und zur Untersuchung einer Polymerelektrolytmembran, insbesondere einer Kohlenwasserstoff-Polymerelektrolytmembran und eine Transportstrecke zur Beschichtung einer Polymerelektrolytmembran, insbesondere einer beschichteten Kohlenwasserstoff-Polymerelektrolytmembran.

Die Produktion von Membran-Elektroden-Einheiten (MEA - engl. membrane electrode assembly) für den Einsatz in Wasserstoffbrennstoffzellen oder Wasserelektrolyseuren erfolgt im Vergleich zu anderen Produktionsprozessen in der entsprechenden Lieferkette, beispielsweise der Lieferkette der Fahrzeugindustrie oder für Wasserelektrolyseursysteme, noch immer weitgehend im Manufakturbetrieb, sodass im Stand der Technik dafür nach wie vor keine allgemein anerkannten Standards zur Qualitätssicherung existieren. Zwar wurden qualitätssichernde Maßnahmen wie z.B. die sogenannte Röntgenfluoreszenzspektroskopie oder Vision-Systeme, die insbesondere aus der Batterieherstellung bekannt sind, provisorisch für die MEA-Produktion adaptiert, jedoch werden diese, da sie eben nicht für die MEA-Produktion entwickelt wurden, oftmals nicht den entsprechenden spezifischen Anforderungen gerecht.

Vor diesem Hintergrund wird die Entwicklung optimierter Systeme zur Untersuchung der entsprechenden Produktionsmittel für die MEA-Produktion bzw. insbesondere der MEA oder der (noch) unbeschichteten Polymerelektrolytmembran angestrebt. Dabei ist es zweckmäßig, dass diese Systeme insbesondere für den Einsatz entlang einer Transportstrecke, die die Polymerelektrolytmembranen, z.B. vor oder nach dem Beschichten der Polymerelektrolytmembran, transportiert, konstruiert sind bzw. sich mit der Transportstrecke kombinieren lassen, sodass ein Transportstreckenabschnitt der Transportstrecke entsteht, an dem eine Untersuchung an der Polymerelektrolytmembran durchgeführt wird.

Hierbei bieten Transmissionslichtuntersuchungen für die MEA-Produktion eine Möglichkeit eine kontinuierlich transportierte MEA oder Polymerelektrolytmembran auch bei hohem Durchsatz effizient mittels transmittiertem Licht zu untersuchen. Eine Transmissionslichtuntersuchungseinrichtung umfasst dabei beispielsweise eine Lichtquelle und eine Kamera, wobei die entsprechende MEA oder die Polymerelektrolytmembran von einer Seite beleuchtet bzw. durchleuchtet wird, um Defektstellen bzw. Bereiche mit Defekten aufzulösen und entsprechende Defekte anhand des transmittierten Lichts mit der Kamera zu detektieren.

Defekte wie Kratzer, Nadellöcher sowie andere Spuren oder Rückstände eines Produktionsprozesses, da diese - falls in einer Wasserstoffbrennstoffzelle oder einem Wasserelektrolyseur verbaut - potenziell zu Fehlfunktionen oder Kurzschlüssen führen können, sind dabei besonders von Bedeutung. Solche Defekte werden bei der Transmissionslichtuntersuchung beispielsweise aufgelöst, da die Polymerelektrolytmembran an den entsprechenden Defektstellen eine veränderte Dicke oder gar ein Loch aufweist, sodass dort verstärkt Licht transmittiert wird.

Die Implementierung von Transmissionslichtuntersuchungen an Polymerelektrolytmembranen stellt insofern eine Herausforderung dar, als dass es sich bei Polymerelektrolytmembranen in der Regel um wenige 10 µm dünne Folien handelt, die häufig stark lichtdurchlässig oder im Wesentlichen transparent sind. Dementsprechend besteht die Gefahr, dass Defektstellen der Polymerelektrolytmembran durch die Transmissionslichtuntersuchungseinrichtung nicht richtig aufgelöst und somit übersehen oder falsch beurteilt werden.

Hierbei könnte die Transmissionslichtuntersuchung beispielsweise erst an der MEA bzw. der beschichteten Polymerelektrolytmembran, die bereits eine (dunkle) Katalysatorschicht aufweist, durchgeführt werden, wobei Defektstellen der Katalysatorschicht bzw. der Polymerelektrolytmembran im Vergleich zu defektfreien (beschichteten) Bereichen hell erscheinen. Dies würde allerdings - vor dem Hintergrund, dass Polymerelektrolytmembranen oder beschichtete Polymerelektrolytmembran mit Defektstellen nicht für die finale Anwendung geeignet sind, es sich also um Ausschuss handelt - für den Fall, dass die Polymerelektrolytmembran in einem Bereich mit einer Defektstelle mit einer Katalysatorschicht beschichtet wird, zu einer erheblichen Verschwendung von Katalysatorschichtmaterial führen. Da insbesondere das Katalysatorschichtmaterial aufgrund der darin enthaltenen teuren (Edel-)Metalle, wie z.B. Platin, teuer ist, wären die daraus resultierenden zusätzlichen Herstellungskosten gravierend.

Der Erfindung liegt daher die Aufgabe zugrunde, eine Vorrichtung bereitzustellen, mit der Defektstellen einer transportierten Polymerelektrolytmembran, insbesondere Kohlenwasserstoff-Polymerelektrolytmembran, mittels Licht auf eine effiziente Art und Weise aufgelöst werden können. Zumindest ist es Aufgabe der Erfindung, Lehren zur verbesserten Auflösung von Defektstellen unbeschichteter - aber auch beschichteter - Membranen bereitzustellen.

Diese Aufgabe wird durch einen Transportstreckenabschnitt gemäß Anspruch 1 und eine Transportstrecke gemäß Anspruch 11 gelöst. Bevorzugte Ausführungsformen der Erfindung sind Gegenstand der abhängigen Ansprüche.

Hintergrund der Erfindung ist, dass sich die Erfinder ebenjener Aufgabe, Vorrichtungen sowie Standards zur Qualitätssicherung bei der Herstellung von MEAs bzw. katalysatorbeschichteten Polymerelektrolytmembranen in Transportstrecken für die Inline-Fertigung zu implementieren, angenommen haben.

Dabei ist die Forschung an Kohlenwasserstoff-Polymerelektrolytmembranen für Wasserstoffbrennstoffzellen- und Wasserelektrolyseuranwendungen, wie Polymerelektrolytmembranen auf Basis von sulfonierten Polysulfonen, sulfonierten Polyphenylenen, funktionalisierten Polybenzimidazolen oder phosphorierten Polybenzimidazolen oder insbesondere von Funktionsmaterialien für Wasserstofftechnologien auf Basis von nicht-fluorierten Kohlenwasserstoffverbindungen, ein zentrales Anliegen der Erfinder.

Die Erfinder machten hierbei bei Experimenten zur Umsetzung einer Transmissionslichtuntersuchung an den entsprechenden Polymerelektrolytmembranen in einer Transportstrecke die folgende Erkenntnis: Da Kohlenwasserstoff-Elektrolytmembranen (im Gegensatz zu kommerziell etablierten Perfluorsulfonsäure-Polymerelektrolytmembranen, die im Wesentlichen transparent sind) eine Färbung (gelb bis bräunlich) haben und entsprechend für gewisse Wellenlängen eine verringerte Transmission aufweisen, könne dieser Effekt ausgenutzt werden, um für Transmissionslichtuntersuchungen einen besseren optischen Kontrast zwischen Defektstellen und defektfreien Bereichen auf einer insbesondere auf einer unbeschichteten Kohlenwasserstoff-Polymerelektrolytmembran zu erreichen (aber auch auf einer beschichteten Polymerelektrolytmembran wie später beschrieben).

Mit anderen Worten stellten die Erfinder fest, dass es für Polymerelektrolytmembranen, um einen besseren Kontrast zwischen Defektstellen und defektfreien Bereichen auf der Polymerelektrolytmembran zu erhalten, vorteilhaft ist, die Untersuchung der Polymerelektrolytmembran basierend auf Licht mit einem Lichtspektrum, das insbesondere Wellenlängen eines Untersuchungs-Wellenlängenbereichs aufweist, für den die Polymerelektrolytmembran eine geringe Lichttransmission aufweist, beinhaltet, durchzuführen. Gleichzeitig kann weiterhin ausreichend Licht transmittiert werden, so dass Verdunklungen, beispielsweise hervorgerufen durch Verschmutzung, aufgelöst werden können. Dies lässt sich - wie von den Erfindern erkannt - insbesondere beispielsweise durch die Wahl einer geeigneten Lichtquelle gewerkstelligen oder indem entsprechende Lichtfilter verwendet werden, die einen Teil der (unerwünschten) Wellenlängen des verwendeten Lichts herausfiltern.

Der entsprechende Ansatz lässt sich auch für beschichtete Polymerelektrolytmembranen ausnutzen, da, wenn die Polymerelektrolytmembran weniger Licht transmittiert bzw. "dunkler" erscheint, Bereiche, in denen nur die Katalysatorschicht der beschichteten Polymerelektrolytmembran aufweist, von Bereichen, an denen die Polymerelektrolytmembran selbst beschädigt ist, unterschieden werden können.

Der erfinderische Gedanke kann insbesondere auch auf weitere Arten von lichtdurchlässigen bzw. im Wesentlichen oder teilweise transparenten Polymerelektrolytmembranen oder Folien übertragen werden, wenn der verwendete Wellenlängenbereich des Lichts unter Berücksichtigung eines Transmissionsspektrums der Polymerelektrolytmembran bzw. der Folie gewählt wird, wobei insbesondere eine Kamera, die (wie üblich) Licht im sichtbaren Wellenlängen Bereich detektiert, verwendet werden kann.

Erfindungsgemäß umfasst ein Transportstreckenabschnitt für den Transport und zur Untersuchung einer Polymerelektrolytmembran, insbesondere einer Kohlenwasserstoff-Polymerelektrolytmembran, ein Transportelement, das eingerichtet ist, die Polymerelektrolytmembran zu transportieren, und eine Transmissionslichtuntersuchungseinrichtung, die zur Untersuchung der transportierten Polymerelektrolytmembran an einer Position, die die Polymerelektrolytmembran beim bestimmungsgemäßen Transport durchläuft, zur Auflösung von Defektstellen der Polymerelektrolytmembran mittels durch die Polymerelektrolytmembran transmittierten Lichts angeordnet ist, wobei die Transmissionslichtuntersuchungseinrichtung eingerichtet ist, die Untersuchung der Polymerelektrolytmembran basierend auf Licht mit einem bestimmten Lichtspektrum durchzuführen, wobei das Lichtspektrum des Lichts in Bezug auf ein Transmissionsverhalten der zu untersuchenden Polymerelektrolytmembran Wellenlängen eines Untersuchungs-Wellenlängenbereichs, für den die Polymerelektrolytmembran eine verringerte Transmission aufweist, beinhaltet und zumindest eine Intensität von Wellenlängen eines Transmissions-Wellenlängenbereichs, für den die Polymerelektrolytmembran eine hohe Transmission aufweist, reduziert ist.

Dies führt zu einem durch die Transmissionslichtuntersuchungseinrichtung detektierten verstärkten Defektstellen-Kontrast, wobei dieser einem detektierten Intensitätsunterschied des transmittierten Lichts zwischen einem Bereich einer Defektstelle der Polymerelektrolytmembran und einem Bereich ohne Defekt der Polymerelektrolytmembran entspricht.

Der Transportstreckenabschnitt ist vorzugsweise ein Abschnitt entlang einer Transportstrecke einer In-Line Fertigung bzw. einer Produktionslinie, die bestimmungsgemäß die Polymerelektrolytmembran, beispielsweise zur Produktion einer Membran-Elektroden-Einheit (MEA - engl. membrane electrode assembly) bzw. einer katalysatorbeschichteten Membran (CCM - engl. catalyst-coated membrane), transportiert. Entsprechend befindet sich der Transportstreckenabschnitt entlang der Transportstrecke bevorzugt vor und/oder nach einer Beschichtungsanlage zur Beschichtung der Polymerelektrolytmembran.

Der Transportstreckenabschnitt umfasst das Transportelement, dass eingerichtet ist, die Polymerelektrolytmembran zu transportieren und demnach vorzugsweise die Polymerelektrolytmembran in einer Weise transportiert/fördert bzw. gewissermaßen führt, dass diese kontinuierlich eine Position durchläuft, an welcher entsprechend die Untersuchung der Polymerelektrolytmembran durch eine Untersuchungseinrichtung durchgeführt werden kann. Bei dem Transportelement handelt es sich bevorzugt um ein physisches Transportmittel wie beispielsweise eine Transportrolle, die eingerichtet ist, die Polymerelektrolytmembran zu stützen, insbesondere umzulenken oder einen Abschnitt eines Förderbands.

Darüber hinaus umfasst der Transportstreckenabschnitt die Transmissionslichtuntersuchungseinrichtung, die an einer entsprechenden Position angeordnet ist, die von der bestimmungsgemäß transportieren Polymerelektrolytmembran durchlaufen wird und die eingerichtet ist, die Polymerelektrolytmembran, die in der bevorzugten In-Line Fertigung bzw. der Produktionslinie durch den Transportstreckenabschnitt transportiert wird, auf Defektstellen bzw. Bereiche mit Defekten zu prüfen. Mit anderen Worten ist die Transmissionslichtuntersuchungseinrichtung vorzugsweise eingerichtet, dass mit dieser eine kontinuierliche Untersuchung bzw. Transmissionslichtuntersuchung in der Produktionslinie an der durch den Transportstreckenabschnitt transportierten Polymerelektrolytmembran durchgeführt werden kann.

Die Transmissionslichtuntersuchungseinrichtung ist dazu entsprechend bevorzugt derart angeordnet, dass bestimmungsgemäß die Transmissionslichtuntersuchung an der Polymerelektrolytmembran durchgeführt werden kann, um Defekte und Unregelmäßigkeiten zu identifizieren, ohne den Produktions- bzw. Transportprozess zu unterbrechen.

Die Polymerelektrolytmembran, die zum bestimmungsgemäßen Transport und zur Untersuchung durch den Transportstreckenabschnitt geeignet ist, ist beispielsweise bevorzugt bandförmig und weist eine Vorder- und eine Rückseite auf, wobei bezweckt wird - durch bestimmungsgemäßes beidseitiges Auftragen oder Beschichten einer Katalysatorschicht-Tinte auf die Polymerelektrolytmembran - MEAs bzw. CCMs für Polymerelektrolytmembran-Wasserstoffbrennstoffzellen oder Polymerelektrolytmembran-Wasserelektrolyseuren herzustellen. Alternativ ist die Polymerelektrolytmembran vorzugsweise bereits mit einer Katalysatorschicht beschichtet. Die Polymerelektrolytmembran ist insbesondere vorzugsweise eine Kohlenwasserstoff-Polymerelektrolytmembran, die Kohlenwasserstoff-Ionomere umfasst bzw. die im Wesentlichen Kohlenwasserstoff-Ionomere beinhaltet bzw. zumindest auf Kohlenwasserstoff-Ionomeren basiert (beispielsweise zu einem bevorzugten Anteil von 70 %, 80 %, 85 %, 90%, 95 %, 99 % oder ausschließlich). Bei der entsprechenden Polymerelektrolytmembran kann es sich vorzugsweise um eine Protonenaustauschmembran oder eine Anionenaustauschmembran handeln, deren Schichtdicke vorzugsweise im zweistelligen µm-Bereich liegt.

Zur Auflösung von Defektstellen der Polymerelektrolytmembran mittels durch die Polymerelektrolytmembran transmittierten Lichts ist die Transmissionslichtuntersuchungseinrichtung vorzugsweise eingerichtet, Licht auf der einen Seite der Polymerelektrolytmembran zu emittieren und insbesondere transmittiertes Licht bzw. Licht, das durch die Polymerelektrolytmembran transmittiert wird und welches Informationen über Defekte des untersuchten Bereichs auf der Polymerelektrolytmembran beinhaltet, auf der anderen Seite der Polymerelektrolytmembran zu detektieren bzw. aufzunehmen. Die Transmissionslichtuntersuchungseinrichtung kann zur Verarbeitung der Informationen des detektierten transmittierten Lichts insbesondere eine Defekt-Informationsverarbeitungseinheit umfassen.

Das Licht zur Untersuchung der Polymerelektrolytmembran, bei dem es sich hierbei vorzugsweise um Licht handelt, das von der Transmissionsuntersuchungseinrichtung emittiert wird bzw. mit dem die Polymerelektrolytmembran beleuchtet wird und/oder um das durch die Polymerelektrolytmembran transmittierte Licht, ist derart vorgesehen bzw. wird derart eingestellt, dass es - vorzugsweise vor der Detektion durch die Transmissionslichtuntersuchungseinrichtung - das bestimmte Lichtspektrum aufweist.

Das Lichtspektrum wird in Abhängigkeit von dem (Licht-)Transmissionsverhalten der Polymerelektrolytmembran bestimmt bzw. bevorzugt entsprechend eingestellt. Das Transmissionsverhalten kann vorzugsweise durch ein Transmissionsspektrum beschrieben werden, das z. B. durch ein UV-Vis-Verfahren experimentell bestimmt werden kann und Informationen über eine wellenlängenabhängige Transmission der Polymerelektrolytmembran beinhaltet, d. h. über den Anteil des Lichts bzw. der elektromagnetischen Strahlung in Abhängigkeit von der Wellenlänge des Lichts, der durch die Polymerelektrolytmembran transmittiert bzw. durchgelassen wird. Dabei sind das Transmissionsverhalten bzw. das Transmissionsspektrum der Polymerelektrolytmembran insbesondere von dem Material der Polymerelektrolytmembran abhängig sowie von der Schichtdicke der Polymerelektrolytmembran. Insbesondere nimmt die Transmission der Polymerelektrolytmembran mit einer Zunahme der Schichtdicke der Polymerelektrolytmembran für das Wellenlängenspektrum ab.

Bevorzugt werden, um das Licht mit dem bestimmten Lichtspektrum bereitzustellen, in der Transmissionslichtuntersuchungseinrichtung Vorkehrungen getroffen, so dass entsprechend bevorzugt beispielsweise bereits das von der Transmissionslichtuntersuchungseinrichtung emittierte Licht ein Lichtspektrum mit Wellenlängen des Untersuchungs-Wellenlängenbereichs aufweist bzw. dem bestimmten Lichtspektrum entspricht, wobei die Wellenlängen des Transmissions-Wellenlängenbereichs bzw. deren Intensitäten im Wesentlichen nicht vorhanden oder reduziert sind. Alternativ oder ergänzend, beispielsweise für den Fall, dass das von der Transmissionslichtuntersuchungseinrichtung emittierte Licht ein herkömmliches Lichtspektrum bzw. insbesondere noch nicht das bestimmte Lichtspektrum aufweist, werden bevorzugt entsprechende Wellenlängen des Transmissions-Wellenlängenbereichs bzw. dessen Intensität entsprechend vor oder nach dem Beleuchten oder Durchleuchten der Polymerelektrolytmembran herausgefiltert bzw. durch einen Filter reduziert oder unterdrückt, um Licht mit dem Lichtspektrum zu erhalten.

Demnach wird vorzugsweise, um Wellenlängen des Transmission-Wellenlängenbereichs zu reduzieren, das Lichtspektrum derart bestimmt bzw. eingestellt, dass die entsprechenden Wellenlängen des Transmission-Wellenlängenbereichs von vornherein eine geringe Intensität aufweisen oder deren Intensität abgeschwächt wird und z.B. die entsprechenden Wellenlängen im Wesentlichen herausgefiltert werden. Das Lichtspektrum des Lichts, insbesondere des durch die Transmissionslichtuntersuchungseinheit detektierten Licht, ist vorzugsweise derart eingestellt, dass insbesondere Wellenlängen des Untersuchungs-Wellenlängenbereichs für die Transmissionslichtuntersuchung verwendet werden bzw. dass diese eine stärkere Intensität als Wellenlängen des Transmissions-Wellenlängenbereichs aufweisen, wobei dies beispielsweise durch eine geeignete Wahl einer Lichtquelle oder durch den Einsatz von Lichtfiltern erreicht werden kann.

In Folge dessen transmittiert die Polymerelektrolytmembran vorzugsweise, im Vergleich mit einem Fall, wenn Licht mit irgendeinem Lichtspektrum verwendet wird, weniger Licht bzw. erscheint, wenn beispielsweise Filter eingesetzt werden, bei Detektion auf der anderen Seite der Polymerelektrolytmembran, auf der das transmittierte Licht von der Transmissionslichtuntersuchungseinrichtung detektiert wird, vergleichsweise dunkler (da Wellenlängen, die von der Polymerelektrolytmembran stark transmittiert werden bzw. die Polymerelektrolytmembran hell erscheinen lassen würden, im Lichtspektrum unterdrückt sind).

Hierbei kann - durch Unterdrücken der Wellenlängen des Transmissions-Wellenlängenwellenbereichs bzw. der "hell" transmittierten Wellenlängen - der Defektstellen-Kontrast verstärkt werden, da die Polymerelektrolytmembran an den Defektstellen, für den Fall von den beschriebenen Defekten, wie Nadellöchern oder Kratzern, eine geringere Schichtdicke aufweist und mehr Licht oder das Licht sogar ganz bzw. im Wesentlichen vollständig durchlässt. Die führt dazu, dass derartige Defektstellen im Vergleich zu einem intakten oder defektfreien Bereich der Polymerelektrolytmembran verhältnismäßig hell erscheinen.

Der verstärkte Defektstellen-Kontrast, der insbesondere vorzugsweise im Vergleich zu einem Defektstellen-Kontrast bei Verwendung von herkömmlichem Licht, verstärkt ist, erlaubt Defektstellen auf Polymerelektrolytmembranen besser aufzulösen und ermöglicht es dadurch, auf besonders effiziente Art und Weise eine Transmissionslichtuntersuchung durchzuführen.

Die beschriebene erfindungsgemäße Transmissionslichtuntersuchungseinrichtung ist für unbeschichtete sowie beschichtete Polymerelektrolytmembranen, jedoch insbesondere bevorzugt für (unbeschichtete und beschichtete) Kohlenwasserstoff-Polymerelektrolytmembranen sowie andere transparente oder teiltransparente Folien geeignet. Für unbeschichtete Polymerelektrolytmembranen erlaubt die Einrichtung eine verbesserte Detektion von Defekten vor dem Beschichten, wohingegen für beschichtete Polymerelektrolytmembran insbesondere zwischen einem Loch in der Polymerelektrolytmembran oder einem Defekt der Katalysatorschicht unterschieden werden kann, da diese sich in ihrer Transmission entsprechend stärker unterscheiden.

Das Lichtspektrum des Lichts wird bevorzugt entsprechend dem Transmissionsspektrum der zu untersuchenden Polymerelektrolytmembran bzw. Folie bestimmt und kann Wellenlängen eines Zwischen-Wellenlängenbereichs mit einer Wellenlängen-Untergrenze und einer Wellenlängen-Obergrenze, eines nach unten geöffneten Wellenlängenbereichs mit einer Wellenlängen-Obergrenze oder eines nach oben geöffneten Wellenlängenbereichs mit einer Wellenlängen-Untergrenze oder mehrere kombinierte Wellenlängenbereiche aufweisen.Bevorzugt sind die Wellenlängen des Untersuchungs-Wellenlängenbereichs, für die die Polymerelektrolytmembran eine verringerte Transmission aufweist - ohne durch die entsprechende Definition darauf beschränkt zu sein - Wellenlängen, für die die Polymerelektrolytmembran eine Transmission unter 80 %, bevorzugt unter 75 %, besonders bevorzugt unter 70 % aufweist, und Wellenlängen des Transmissions-Wellenlängenbereichs, für die die Polymerelektrolytmembran eine hohe Transmission aufweist - ohne durch die entsprechende Definition darauf beschränkt zu sein - Wellenlängen, für die die Polymerelektrolytmembran eine Transmission über 80 %, bevorzugt über 85 %, besonders bevorzugt unter 90 %, aufweist.

Mit anderen Worten wird bevorzugt von der hohen Transmission bzw. Lichtdurchlässigkeit ausgegangen, wenn für die entsprechende Wellenlänge mindestens 80 % beträgt, wohingegen vorzugsweise von einer niedrigen Transmission ausgegangen wird, wenn die Transmission für die entsprechende Wellenlänge weniger als 80 % beträgt. Umgekehrt wird vorzugsweise von der hohen Transmission gesprochen, wenn die Polymerelektrolytmembran für die entsprechende Wellenlänge transparent und stark lichtdurchlässig erscheint, wohingegen bei einer verringerten Transmission für die entsprechende Wellenlänge eine Verdunkelung der Polymerelektrolytmembran und damit eine geringere Lichtdurchlässigkeit erkennbar ist.

Die genannten Transmissionswerte, die sich auf das Transmissionsverhalten der Polymerelektrolytmembran beziehen, können - ohne auf diese Definition beschränkt zu sein - einem experimentell bestimmten Transmissionsspektrum der Polymerelektrolytmembran entnommen werden, das vorzugsweise durch ein UV-Vis Verfahren bestimmt worden ist. Beispielsweise können das Transmissionsspektrum bzw. die optischen Eigenschaften der Polymerelektrolytmembran unter Verwendung eines Spektralphotometers oder eines anderen/vergleichbaren spektroskopischen Geräts ermittelt werden. Bevorzugt wird das Transmissionsspektrum bzw. werden die entsprechenden optischen Eigenschaften der Polymerelektrolytmembran für den ultravioletten, sichtbaren und nahen infraroten Wellenlängenbereich mittels eines Perkin Elmer Lambda 950 Spektralphotometers mit einer Ulbricht-Kugel ermittelt. Hierbei wird die Polymerelektrolytmembran bevorzugt auf einem Glassubstrat aufgebracht und das Transmissionsspektrum der Polymerelektrolytmembran für einen bevorzugten Wellenlängenbereich zwischen 250 nm und 2500 nm aufgenommen.

Bevorzugt beinhaltet der Untersuchungs-Wellenlängenbereich Wellenlängen für den die Polymerelektrolytmembran eine Transmission zwischen 0 % und 80 %, bevorzugt zwischen 5 % und 75 %, besonders bevorzugt zwischen 10 % und 70 %, besonders bevorzugt zwischen 20 % und 60 %, besonders bevorzugt zwischen 30 % und 55 %, besonders bevorzugt zwischen 40 % und 50 %, aufweist.

Die bevorzugten Transmissionsbereiche sind danach vorzugsweise derart gewählt, dass die Polymerelektrolytmembran für die entsprechende Wellenlänge bzw. den Untersuchungs-Wellenlängenbereich teiltransparent bzw. nicht vollständig lichtdurchlässig, aber auch nicht vollständig abgedunkelt erscheint.

Dies erlaubt, dass weiterhin Defekte, die dunkel auf der Polymerelektrolytmembran erscheinen, aufgelöst werden können, wobei wie oben beschrieben insbesondere Defekte, die Beschädigungen der Polymerelektrolytmembran, die sich auf die Schichtdicke der Polymerelektrolytmembran auswirken, betreffen und dadurch hell erscheinen, aufgelöst werden können.

Insbesondere für den Fall einer mit einer Katalysatorschicht beschichteten Polymerelektrolytmembran erscheint ein Defekt durch die Polymerelektrolytmembran, wie beispielsweise ein Nadelloch, sehr hell, wohingegen ein Defekt, der lediglich in der Katalysatorschicht vorliegt, dunkler erscheint, da hierbei die Polymerelektrolytmembran hingegen intakt ist. Hierbei lassen sich insbesondere Defekte der Polymerelektrolytmembran und der Katalysatorschicht unterscheiden.

Wie obenstehend erwähnt, ist das Transmissionsverhalten bzw. das Transmissionsspektrum (mit anderen Worten die Transmission der Polymerelektrolytmembran in Abhängigkeit der Wellenlänge) abhängig von der materiellen Zusammensetzung der Polymerelektrolytmembran sowie insbesondere der Schichtdicke der Polymerelektrolytmembran, wobei die Transmission der Polymerelektrolytmembran mit zunehmender Schichtdicke abnimmt. Entsprechend sind die jeweiligen Transmissionen bzw. Transmissionswerte und die entsprechenden Wellenlängenbereiche von der jeweiligen zu untersuchenden Polymerelektrolytmembran abhängig.

Bevorzugt ist die Intensität der Wellenlängen des Transmissions-Wellenlängenbereichs geringer als eine Intensität der Wellenlängen des Untersuchungs-Wellenlängenbereichs.

Bevorzugt ist die Intensität der Wellenlängen des Transmissions-Wellenlängenbereiches nicht nur verringert, sondern insbesondere geringer als die des Untersuchungs-Wellenlängenbereichs, um einen optimalen Defektstellen-Kontrast zu erhalten. Dies kann dadurch verstanden werden, dass Licht mit Wellenlängen des Transmissions-Wellenlängenbereiches die intakte bzw. defektfreie Polymerelektrolytmembran heller erscheinen lässt und somit Defekte durch die Polymerelektrolytmembran, wie Nadellöcher, die ebenfalls hell erscheinen, da das Licht ungehindert durch diese transmittiert, schlechter zu erkennen sind.

Bevorzugt weist das bestimmte Lichtspektrum einen Intensitätspeak für eine der Wellenlängen des Untersuchungs-Wellenlängenbereichs auf.

Insbesondere, wenn, wie bevorzugt, die Transmissionslichtuntersuchungseinrichtung eine Lichtquelle umfasst, die eingerichtet ist, Licht mit dem bestimmten Lichtspektrum zu emittieren, weist diese vorzugsweise ein gewisses Lichtspektrum mit verschiedenen Wellenlängen und Intensitäten auf. Bevorzugt wird entsprechend eine Lichtquelle mit einem Intensitätspeak, der in dem Untersuchungs-Wellenlängenbereich liegt, gewählt.

Bevorzugt umfasst die Transmissionslichtuntersuchungseinrichtung einen Lichtfilter, der eingerichtet ist, Wellenlängen des Transmissions-Wellenlängenbereichs derart herauszufiltern, dass das Licht das bestimmte Lichtspektrum aufweist.

Alternativ oder zusätzlich zur Wahl einer geeigneten Lichtquelle wird bevorzugt zumindest ein Filter verwendet, um Wellenlängen des Transmissions-Wellenlängenbereichs bzw. insbesondere störende Wellenlängen, die eine hohe Intensität sowie Transmission durch die Polymerelektrolytmembran aufweisen, herauszufiltern. Dieser Filter kann beispielsweise vorzugsweise zwischen Lichtquelle und Polymerelektrolytmembran oder zwischen Polymerelektrolytmembran und einer Detektionsvorrichtung, insbesondere einer Kamera, angeordnet sein, wobei auch mehrere Filter an entsprechenden Positionen zwischen Lichtquelle und Kamera vorgesehen sein können.

Vorzugsweise ist die Transmissionslichtuntersuchungseinrichtung des Transportstreckenabschnitts zur Untersuchung einer Kohlenwasserstoff-Polymerelektrolytmembran bevorzugt eine Polymerelektrolytmembran auf Basis von sulfonierten Polysulfonen, sulfonierten Polyphenylenen, funktionalisierten Polybenzimidazolen oder phosphorierten Polybenzimidazolen.

Die Kohlenwasserstoff-Polymerelektrolytmembran weist vorzugsweise beispielsweise ein Transmissionsspektrum auf, das für Wellenlängen kleiner 370 nm, bevorzugt kleiner 375 nm, besonders bevorzugt kleiner 380 nm, besonders bevorzugt kleiner 395 nm, besonders bevorzugt kleiner 400 nm, besonders bevorzugt kleiner 405 nm, besonders bevorzugt kleiner 420 nm, besonders bevorzugt kleiner 450 nm, besonders bevorzugt kleiner 500 nm, besonders bevorzugt kleiner 600 nm und bevorzugt größer 100 nm, besonders bevorzugt größer 200 nm, besonders bevorzugt größer 250 nm oder für Wellenlängen zwischen 380 nm und 500 nm, bevorzugt zwischen 390 nm und 450 nm, besonders bevorzugt zwischen 395 nm und 420 nm, besonders bevorzugt zwischen 395 nm und 405 nm, die verringerte Transmission aufweist, wohingegen vorzugsweise das Transmissionsspektrum für Wellenlängen außerhalb der entsprechenden Wellenlängen der verringerten Transmission die hohe Transmission aufweist (Transmissions-Wellenlängenbereich). Das bevorzugte Transmissionsspektrum kann entsprechend einer Materialzusammensetzung der Kohlenwasserstoff-Polymerelektrolytmembran sowie einer Schichtdicke der Kohlenwasserstoff-Polymerelektrolytmembran variieren und abweichen. Bevorzugt hat die Polymerelektrolytmembran eine Schichtdicke zwischen 5 und 150 µm.

Der Untersuchungs-Wellenlängenbereich beinhaltet bevorzugt Wellenlängen kleiner 370 nm, bevorzugt kleiner 375 nm, besonders bevorzugt kleiner 380 nm, besonders bevorzugt kleiner 395, besonders bevorzugt kleiner 400 nm, besonders bevorzugt kleiner 405 nm, besonders bevorzugt kleiner 420 nm, besonders bevorzugt kleiner 450 nm, besonders bevorzugt kleiner 500 nm, besonders bevorzugt kleiner 600 nm und bevorzugt größer 100 nm, besonders bevorzugt größer 200 nm, besonders bevorzugt größer 250 nm. Bevorzugt sind Wellenlängen des bevorzugten Transmissions-Wellenlängenbereichs, außerhalb des Untersuchungs-Wellenlängenbereichs, reduziert.

Hierbei wird von einem Transmissionsspektrum ausgegangen, das für die entsprechenden Wellenlängen die verringerte Transmission aufweist.

Alternativ bevorzugt beinhaltet der Untersuchungs-Wellenlängenbereich Wellenlängen zwischen 380 nm und 500 nm, bevorzugt 390 nm und 450 nm, besonders bevorzugt 395 nm und 420 nm, besonders bevorzugt 395 nm und 405 nm, auf. Bevorzugt sind Wellenlängen des bevorzugten Transmissions-Wellenlängenbereichs, außerhalb des Untersuchungs-Wellenlängenbereichs, reduziert.

Die bevorzugten Wellenlängen des Untersuchungs-Wellenlängenbereichs werden im Allgemeinen entsprechend dem Transmissionsverhalten bzw. Transmissionsspektrum der Polymerelektrolytmembran, das durch eine Materialzusammensetzung der Polymerelektrolytmembran sowie einer Schichtdicke der Polymerelektrolytmembran variieren kann, eingestellt.

Bevorzugt ist das Transportelement, insbesondere eine Transportrolle, zumindest abschnittsweise lichtdurchlässig und die Transmissionslichtuntersuchungseinrichtung umfasst eine/die Lichtquelle und eine Lichtdetektionseinheit, insbesondere eine Kamera, wobei zumindest eine der Lichtquelle oder der Lichtdetektionseinheit unterhalb oder innerhalb des Transportelements angeordnet ist und das Licht zur Untersuchung der Polymerelektrolytmembran den lichtdurchlässigen Abschnitt des Transportelements durchläuft.

Insbesondere wird hierdurch ermöglicht, die Transmissionslichtuntersuchung an einem gelagerten Abschnitt der Polymerelektrolytmembran durchzuführen. Insbesondere wird dadurch eine alternative Anordnung und potenziell platzsparendere Anordnung der Transmissionslichtuntersuchungseinrichtung im Transportstreckenabschnitt bzw. entlang der Transportstrecke ermöglicht, da insbesondere Komponenten der Transmissionslichtuntersuchungseinrichtung (hier die Lichtquelle oder die Lichtdetektionseinheit) unterhalb oder innerhalb des Transportelements angeordnet werden können.

Dies ermöglicht die Transmissionslichtuntersuchung auf besonders effiziente Art und Weise an der Polymerelektrolytmembran durchzuführen. Bevorzugt ist hierbei der lichtdurchlässige Abschnitt mit vergleichbaren Eigenschaften wie ein obenstehend beschriebener Lichtfilter eingerichtet, sodass das Licht das bestimmte Lichtspektrum aufweist.

Erfindungsgemäß umfasst eine Transportstrecke zur Beschichtung einer Polymerelektrolytmembran mit einer Katalysatorschicht eine Beschichtungsanlage, die zum Auftragen der Katalysatorschicht auf die Polymerelektrolytmembran eingerichtet ist und einen erfindungsgemäßen Transportstreckenabschnitt. Insbesondere handelt es sich bei der Polymerelektrolytmembran um eine Kohlenwasserstoff-Polymerelektrolytmembran oder eine bereits beschichtete (Kohlenwasserstoff-)Polymerelektrolytmembran.

Dabei ergeben sich die im Zusammenhang mit der erfindungsgemäßen Transmissionslichtuntersuchungseinrichtung erläuterten Eigenschaften und Vorteile auf gleiche oder ähnliche Weise, weshalb zur Vermeidung von Wiederholungen auf die diesbezüglichen Ausführungen im Zusammenhang mit der erfindungsgemäßen Vorrichtung verwiesen wird.

Bevorzugt entspricht der Transportstreckenabschnitt entlang der Transportstrecke einem Abschnitt der Transportstrecke vor der Beschichtungsanlage.

Hierbei wird ist die Transportstrecke eingerichtet, dass die Polymerelektrolytmembran vor dem Beschichten untersucht wird, so dass Defekte der Polymerelektrolytmembran frühzeitig detektiert werden können und die Beschichtung des entsprechenden Bereichs der Polymerelektrolytmembran mit der Katalysatorschicht durch die Beschichtungsanlage ausgesetzt werden kann. Dadurch kann Katalysatorschichtmaterial eingespart werden.

Alternativ bevorzugt entspricht der Transportstreckenabschnitt entlang der Transportstrecke einem Abschnitt der Transportstrecke nach der Beschichtungsanlage und es wird mittels der Transmissionslichtuntersuchungseinrichtung des Transportstreckenabschnitts unterschieden, ob ein Defekt in der (beschichteten) Polymerelektrolytmembran oder in der Katalysatorschicht der Polymerelektrolytmembran vorliegt.

Hierbei kann zwischen einem Defekt, der in der Polymerelektrolytmembran vorliegt und somit in der Regel auch in der Katalysatorschicht und einem Defekt, der lediglich in der Katalysatorschicht unterschieden werden, da ein Defekt, der ausschließlich in der Katalysatorschicht vorliegt, entsprechend dunkler erscheint, da die Polymerelektrolytmembran dunkler erscheint. Für gewissen Anwendungen sind Defekte in der Katalysatorschicht weniger erheblich wie Defekte in der Polymerelektrolytmembran, die beispielsweise einen Kurzschluss herbeiführen können, sodass hierbei eine Material- und Kostenersparnis ermöglicht wird.

Alternativ bevorzugt umfasst die Transportstrecke einen weiteren erfindungsgemäßen Transportstreckenabschnitt und einer der Transportstreckenabschnitte entspricht entlang der Transportstrecke an einem Abschnitt vor der Beschichtungsanlage und der andere Transportstreckenabschnitt entspricht entlang der Transportstrecke einem Abschnitt nach der Beschichtungsanlage.

Hierbei werden die beiden vorstehenden bevorzugten Alternativen kombiniert. Insbesondere kann durch mehrmaliges Untersuchen der Polymerelektrolytmembran, vor und nach der Beschichtung, bestimmt werden, ob Defekte beim Beschichten der Polymerelektrolytmembran auftreten. Zudem können durch das mehrfache Untersuchen der Polymerelektrolytmembran potenziell Defekte detektiert werden, die beispielsweise bei der Untersuchung vor der Beschichtung nicht detektiert wurden.

Zur Detektion des Lichts zur Untersuchung der Polymerelektrolytmembran ist die Transmissionsuntersuchungseinrichtung des Transportstreckenabschnitts bzw. der Transportstrecke insbesondere bevorzugt mit einer Lichtdetektionseinheit, insbesondere einer Kamera, ausgestattet. Dabei wird durch die erfindungsgemäße Konfiguration des Transportstreckenabschnitts bzw. insbesondere der Transmissionslichtuntersuchungseinheit, wie beschrieben, der verbesserte Defektstellen-Kontrast erreicht. Dieser ist visuell mit dem Auge, jedoch allerdings insbesondere auch mit einer Standardkamera bzw. einer konventionellen Kamera, die Licht im sichtbaren Wellenbereich aufnimmt, wahrnehmbar bzw. detektierbar.

Entsprechend kann insbesondere dadurch, dass die Untersuchung der Polymerelektrolytmembran basierend auf dem Licht mit dem Untersuchungs-Wellenlängenbereich durchgeführt wird und somit der verstärkte Defektstellen-Kontrast zustande kommt, insbesondere eine solche konventionelle Kamera, die (wie üblich) Licht im sichtbaren Wellenlängenbereich (ca. 380 nm bis 780 nm) aufnimmt, verwendet werden. Eine solche ist verhältnismäßig einfach in dem Transportstreckenabschnitt (bzw. innerhalb oder unterhalb des Transportelements) zu integrieren (es kommen eine Vielzahl von Kamerasystemen in Frage, die ggf. auf engem Bauraum verbaut werden können und der Umgang mit diesen Kamerasystemen ist bekannt) und bietet eine kostengünstige Lösung für die Inspektion der bestimmungsgemäß transportierten Polymerelektrolytmembran, insbesondere Kohlenwasserstoff-Polymerelektrolytmembran. Es versteht sich, dass alternativ ebenfalls eine Lichtdetektionseinheit oder Kamera verwendet werden kann, die insbesondere zur Detektion des Lichts, das zur Untersuchung der Polymerelektrolytmembran verwendet wird, bzw. zur Detektion der Wellenlängen des Untersuchungs-Wellenlängenbereichs eingerichtet ist.

Es zeigen:
- Figur 1: schematische Darstellungen von Transportstreckenabschnitten, die jeweils insbesondere ein Transportelement und eine Transmissionslichtuntersuchungseinrichtung umfassen und für den Transport und zur Untersuchung einer Polymerelektrolytmembran eingerichtet sind;
- Figur 2: experimentelle Transmissionsspektra, die durch ein UV-Vis Gerät aufgenommen wurden, wobei insbesondere ein Transmissionsspektrum einer Kohlenwasserstoff-Polymerelektrolytmembran sowie Transmissionsspektra zweier PFSA-Polymerelektrolytmembranen dargestellt sind;
- Figur 3a: schematische Darstellungen von einer unbeschichteten und einer beschichteten Polymerelektrolytmembran, die unter Verwendung von Licht mit verschiedenen Lichtspektra untersucht wird, wobei sich in Abhängigkeit des verwendeten Lichts ein Defektstellen-Kontrast verändert;
- Figur 3b: schematische Darstellungen von einer unbeschichteten und einer beschichteten Polymerelektrolytmembran, die unter Verwendung von Licht mit verschiedenen Lichtspektra untersucht wird, wobei sich in Abhängigkeit des verwendeten Lichts ein Defektstellen-Kontrast verändert (in Farbe).

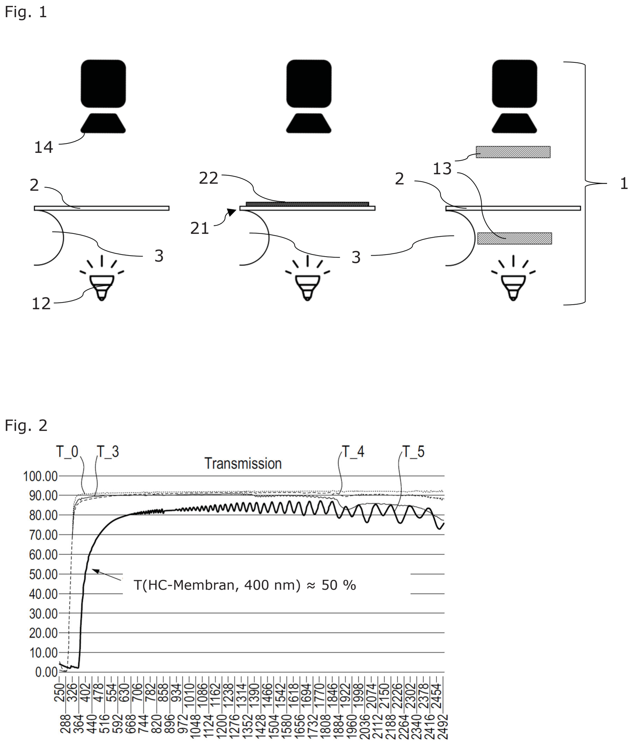

Ausführungsformen eines erfindungsgemäßen Transportstreckenabschnitts 1 mit einem Transportelement 3 und einer Transmissionslichtuntersuchungseinrichtung werden anhand der Figuren 1, 2 und 3 beschrieben.

In Figur 1 sind drei Ausführungsformen eines erfindungsgemäßen Transportstreckenabschnitts 1 schematisch dargestellt, die jeweils eine Polymerelektrolytmembran 2 (linke und rechte Darstellung) bzw. eine mit einer Katalysatorschicht 22 beschichtete Polymerelektrolytmembran 21 (mittige Darstellung) umfassen. Die Transportstreckenabschnitte 1, die jeweils entsprechend einer bevorzugten Ausführungsform modifiziert sind, sind für den Transport und zur Untersuchung der jeweiligen Polymerelektrolytmembran 2, 21 eingerichtet und umfassen jeweils das Transportelement 3, das eingerichtet ist, die Polymerelektrolytmembran 2, 21 zu transportieren und jeweils eine erfindungsgemäße Transmissionslichtuntersuchungseinrichtung. Die Transmissionslichtuntersuchungseinrichtung ist zur Untersuchung der transportierten Polymerelektrolytmembran 2, 21 an einer Position, die die Polymerelektrolytmembran 2, 21 beim bestimmungsgemäßen Transport durchläuft, zur Auflösung von Defektstellen 5 der Polymerelektrolytmembran 2, 21 mittels durch die Polymerelektrolytmembran 2, 21 transmittierten Lichts angeordnet ist.

Hierbei werden die Polymerelektrolytmembranen 2, 21 an dem Transportstreckenabschnitt 1 durch das Transportelement 3, das hierbei eine Transportrolle ist, (kontinuierlich) transportiert und von der jeweiligen Transmissionslichtuntersuchungseinrichtung fortlaufend (auf Defektstellen sowie Verunreinigungen) untersucht. Entsprechend werden diese beispielsweise zur Qualitäts-Untersuchung der Polymerelektrolytmembranen bzw. zur Auflösung von Defektstellen 5 auf einer Seite der Polymerelektrolytmembranen 2, 21 mit Licht beleuchtet und das Licht bzw. insbesondere transmittiertes Licht, das beispielsweise die Defektstellen - falls vorhanden - aber auch intakte Bereiche der Polymerelektrolytmembran 2, 21 sowie Verschmutzungen auflöst, auf einer anderen Seite der jeweiligen Polymerelektrolytmembran 2, 21 detektiert.

Dabei handelt es sich bei den Polymerelektrolytmembranen 2, 21 beispielsweise insbesondere um Kohlenwasserstoff-Polymerelektrolytmembranen, die eine Schichtdicke im zweistelligen µm-Bereich aufweisen und teiltransparent bzw. im Wesentlichen lichtdurchlässig sind, wobei die entsprechenden Kohlenwasserstoff-Polymerelektrolytmembran wie üblich - allerdings ohne darauf beschränkt zu sein - eine gelb bis bräunliche Färbung aufweisen.

Der in Figur 1 links dargestellte Transportstreckenabschnitt 1 entspricht einem Transportstreckenabschnitt 1 gemäß einer bevorzugten Ausführungsform bei dem die unbeschichtete Polymerelektrolytmembran 2 von der dargestellten Transmissionslichtuntersuchungseinrichtung, die insbesondere eine Lichtquelle 12 und eine Kamera 14 umfasst, untersucht wird. Demnach entspricht der Transportstreckenabschnitt 1 einem Abschnitt entlang der Transportstrecke vor einer Beschichtungsanlage (nicht dargestellt), die zum Auftragen einer Katalysatorschicht auf die Polymerelektrolytmembran 2 eingerichtet ist.

Im Vergleich dazu wird in der in Figur 1 mittig dargestellten Ausführungsform eines Transportstreckenabschnitts 1 die mit der Katalysatorschicht 22 beschichtete Polymerelektrolytmembran 21 untersucht, wobei die Transmissionslichtuntersuchungseinrichtung ansonsten gleichartig, mit einer Lichtquelle 12 und einer Kamera 14 wie in der links dargestellten Ausführungsform ausgebildet ist. Demnach entspricht der Transportstreckenabschnitt 1 einem Abschnitt entlang der Transportstrecke nach einer Beschichtungsanlage (nicht dargestellt), die zum Auftragen einer Katalysatorschicht auf die Polymerelektrolytmembran 2 eingerichtet ist.

Hingegen umfasst bei dem in Figur 1 rechts dargestellten Transportstreckenabschnitt 1 die Transmissionslichtuntersuchungseinrichtung im Vergleich zu den anderen Transmissionslichtuntersuchungseinrichtungen noch zusätzlich zwischen Lichtquelle 12 und Polymerelektrolytmembran 2 einen Lichtfilter 13 sowie zwischen Polymerelektrolytmembran 2 und Kamera 14 einen weiteren Lichtfilter 13, wobei die unbeschichtete Polymerelektrolytmembran 2 untersucht wird. Insbesondere können auch nur einer der Lichtfilter 13 oder weitere Lichtfilter 13 vorgesehen sein.

Die dargestellten Transportstreckenabschnitte 1 sind in Bezug zueinander modifiziert, um verschiedene bevorzugte Ausführungsformen eines erfindungsgemäßen Transportstreckenabschnitts 1 zu veranschaulichen. Es versteht sich, dass diese jeweils abgewandelt oder kombiniert werden können, sodass beispielsweise auch in der in Figur 1 rechts dargestellten Ausführungsform ebenfalls die beschichtete Polymerelektrolytmembran 22 untersucht werden könnte. Insbesondere können auch in den links und mittig dargestellten Ausführungsformen Lichtfilter 13 verwendet werden, wobei diese auch insbesondere zwischen Polymerelektrolytmembran 2, 21 und Kamera 14 angeordnet sein können.

Insbesondere kann das Transportelement 3 beispielsweise zumindest abschnittsweise oder vollständig lichtdurchlässig sein, z.B. eine lichtdurchlässige Transportrolle und eine oder mehrere Komponenten der Transmissionslichtuntersuchungseinrichtung, beispielsweise Lichtquelle 12, Kamera 14 oder Lichtfilter 13, können innerhalb oder unterhalb des Transportelements 3 angeordnet werden, um Platz zu sparen. Insbesondere kann der lichtdurchlässige Abschnitt des Transportelements 3 selbst ein Lichtfilter 13 sein.

In Figur 1 ist die dargestellte jeweilige Transmissionslichtuntersuchungseinrichtung eingerichtet, die Untersuchung der Polymerelektrolytmembran 2, 21 basierend auf Licht mit einem bestimmten Lichtspektrum durchzuführen, wobei das Lichtspektrum des Lichts in Bezug auf ein Transmissionsverhalten der zu untersuchenden Polymerelektrolytmembran 2, 21 Wellenlängen eines Untersuchungs-Wellenlängenbereichs, für den die Polymerelektrolytmembran eine verringerte Transmission aufweist, beinhaltet und zumindest eine Intensität von Wellenlängen eines Transmissions-Wellenlängenbereichs, für den die Polymerelektrolytmembran eine hohe Transmission aufweist, reduziert ist.

Dies führt zu einem durch die Transmissionslichtuntersuchungseinrichtung detektierten verstärkten Defektstellen-Kontrast, wobei dieser einem detektierten Intensitätsunterschied des transmittierten Lichts zwischen einem Bereich einer Defektstelle der Polymerelektrolytmembran und einem Bereich ohne Defekt der Polymerelektrolytmembran entspricht.

Das Transmissionsverhalten des Polymerelektrolytmembran 2, 21 ist derart, dass die Polymerelektrolytmembran 2, 21 für gewissen Wellenlängen (des Untersuchungs-Wellenlängenbereichs) die verringerte Transmission aufweist und für gewisse Wellenlängen bzw. für die Wellenlängen außerhalb des Untersuchungs-Wellenlängenbereichs (Transmissions-Wellenlängenbereich) die hohe Transmission aufweist. Eine Färbung der Polymerelektrolytmembran 2, 21 richtet sich dabei insbesondere nach dem Transmissionsverhalten bzw. der jeweiligen Transmission in Abhängigkeit der Wellenlänge (der Wellenlängen eines Wellenlängenbereichs des sichtbaren Lichts). Beispielsweise kann das Transmissionsverhalten durch ein Transmissionsspektrum, wie in Figur 2 dargestellt, bestimmt werden.

Hierbei weist die Kohlenwasserstoff-Elektrolytmembran (vgl. Kurve T_5 in Figur 2) beispielsweise eine Transmission unter 80 % für Wellenlängen, die kleiner als ca. 600 nm sind, eine Transmission unter 75 % für Wellenlängen, die kleiner als ca. 500 nm sind, eine Transmission unter 70 % für Wellenlängen, die kleiner als ca. 450 nm sind, eine Transmission unter 60 % für Wellenlängen, die kleiner als ca. 405 nm sind und eine Transmission unter 50 % für Wellenlängen, die kleiner als ca. 400 nm sind, auf.

Dementsprechend ist das Lichtspektrum des Lichts beispielsweise insbesondere derart eingerichtet, dass es Wellenlängen, die kleiner als 370 nm sind oder 375 nm oder 380 nm oder 395 nm oder 400 nm oder 405 nm oder 420 nm oder 450 nm oder 500 nm oder 600 nm, beinhaltet.

Dabei wird das Licht mit dem bestimmten Lichtspektrum insbesondere in der linken und mittleren Ausführungsform des Transportstreckenabschnitts 1 in Figur 1 beispielsweise durch Wahl der Lichtquelle 12 erhalten, wobei in der rechten Ausführungsform zusätzlich oder alternativ ein Lichtfilter 13 vorgesehen ist, der insbesondere eingerichtet ist, die Wellenlängen des Transmissions-Wellenlängenbereichs herauszufiltern bzw. die entsprechenden Intensitäten zu reduzieren. Insbesondere kann hierbei für die entsprechende Polymerelektrolytmembran 2, 21 mit dem beschriebenen Transmissionsspektrum beispielsweise die Lichtquelle 12 derart eingerichtet sein, dass sie insbesondere Licht mit dem entsprechenden Wellenlängenbereich emittiert. Beispielsweise wird Licht mit einem Lichtspektrum, das insbesondere Wellenlängen unter 400 nm umfasst bzw. für diese Wellenlängen eine hohe Intensität aufweist. Insbesondere kann das Licht für diesen Wellenlängenbereich einen Intensitätspeak für diesen Wellenlängenbereich aufweisen. Beispielsweise hat die Polymerelektrolytmembran ein Transmissionsspektrum, das für Licht der Wellenlänge von ca. 400 nm eine Transmission von ca. 50 % aufweist.

Alternativ oder zusätzlich kann das Licht mit dem bestimmten Lichtspektrum unter Verwendung des Lichtfilters 13 erhalten werden, der bevor das Licht der Lichtquelle 12 von der Kamera 14 detektiert wird, Wellenlängen des Transmissions-Wellenlängenbereichs, hierbei beispielsweise insbesondere zumindest Wellenlängen über ca. 400 nm oder zumindest über 600 nm, für die das Transmissionsspektrum eine höhere Transmission als ca. 80 % hat, herausfiltern. Der Transportstreckenabschnitt 1 ist nicht auf die dargestellte Anordnung des Lichtfilters außerhalb der Kamera 14 beschränkt und kann beispielsweise einen Lichtfilter 13 innerhalb der Kamera 14 oder direkt vor einer Linse der Kamera 14 aufweisen.

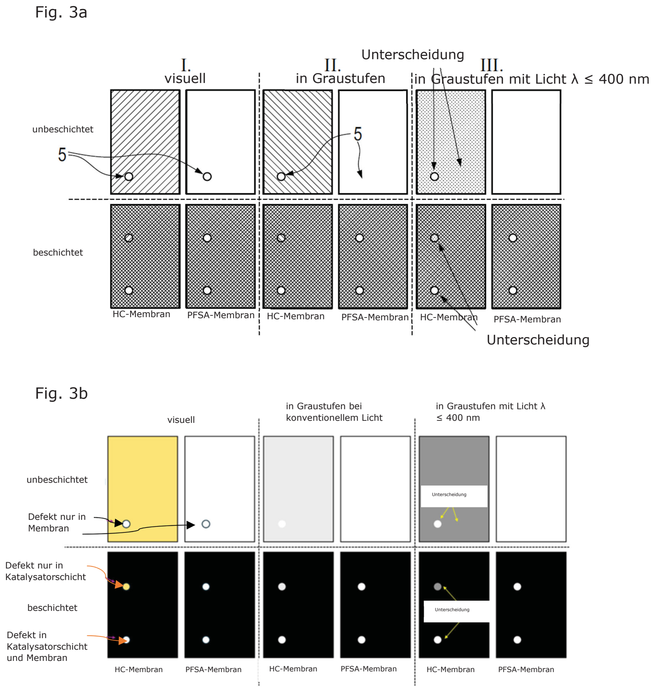

Durch die entsprechenden Vorkehrungen wird der beschriebene durch die Transmissionslichtuntersuchungseinrichtung detektierte verstärkte Defektstellen-Kontrast erreicht, wie im Folgenden unter Hinzunahme der Figur 3a näher beschrieben wird.

In Figur 3a ist schematisch dargestellt, wie die Auswahl des Lichts mit dem bestimmten Lichtspektrum für eine Kohlenwasserstoff-Polymerelektrolytmembran (HC-Membran), die üblicherweise teiltransparent mit einer gelblich-braunen Färbung ist und beispielsweise das beschriebene Transmissionsspektrum (vgl. Kurve T_5 in Figur 2) aufweist bzw. das insbesondere für Wellenlängen im Wellenlängenbereich von unter 400 nm bzw. unter 380 nm die verringerte Transmission aufweist, ausgenutzt werden kann, um einen verbesserten Defektstellen-Kontrast zu erhalten. Dabei ist neben der Kohlenwasserstoff-Polymerelektrolytmembran zum Vergleich dargestellt, wie jeweils eine PFSA-Polymerelektrolytmembran (PFSA-Membran), die im Wesentlichen transparent ist und ein Transmissionsspektrum (vgl. Kurve T4 in Figur 2) aufweist, das für Wellenlängen im sichtbaren Wellenlängenbereich eine sehr hohe Transmission (ca. 90 %) aufweist, aussehen würde.

Figur 3b zeigt eine farbige Version der Figur 3a zum besseren Verständnis der Figur 3a.

Bereich I. in Figur 3a soll veranschaulichen, wie die exemplarische Kohlenwasserstoff-Polymerelektrolytmembran sowie die exemplarische PFSA-Polymerelektrolytmembran bei visueller Betrachtung mit dem bloßen Auge bzw. einer herkömmlichen Kamera betrachtet erscheinen würden.

Obwohl die Kohlenwasserstoff-Polymerelektrolytmembran in Bereich I. in Figur 3a schraffiert dargestellt ist, ist die Kohlenwasserstoff-Polymerelektrolytmembran bei visueller Betrachtung bzw. bei Betrachtung mit dem Auge (visuell) eigentlich farbig bzw. insbesondere gelblich (vgl. Figur 3b), wohingegen die PFSA-Polymerelektrolytmembran (hier weiß dargestellt), wie bereits erwähnt, transparent erscheint.

Die Bereiche II. und III. in Figur 3a sollen hingegen veranschaulichen, wie die jeweiligen Polymerelektrolytmembranen erscheinen, wenn diese mittels einer Kamera 14 abgebildet und das entsprechende Bild in Graustufen umgewandelt wurde. Diese Darstellung wurde gewählt, da für die Untersuchung von Defektenstellen 5 an Polymerelektrolytmembranen die durch die Kamera detektierten Bilder der Polymerelektrolytmembran oftmals in Bilder mit Graustufen (Bereich II. und Bereich III.) umgewandelt werden. Dies kann zum Beispiel sinnvoll sein, wenn für die Transmissionslichtuntersuchung die Untersuchung der Polymerelektrolytmembran auf Defektstellen 5 beispielsweise automatisch mit einem Bildverarbeitungsprogramm durchgeführt wird (beispielsweise durch eine Defekt-Informationsverarbeitungseinheit, das Defekte automatisch mittels einer Kontrastanalyse auswertet).

Dabei sind in Bereich II. die Graustufen-Bilder der jeweiligen Polymerelektrolytmembranen veranschaulicht, wenn konventionelles Licht, beispielsweise Licht einer Glühbirne, verwendet wurde. Dagegen sind in Bereich III. die Graustufen-Bilder der jeweiligen Polymerelektrolytmembranen veranschaulicht, wenn das Licht mit dem bestimmten Lichtspektrum, hier Licht mit dem Wellenlängenbereich λ ≤ 400 nm, verwendet wurde. Hierbei erscheint die Kohlenwasserstoff-Polymerelektrolytmembran in Bereich III. dunkler als in Bereich II., wohingegen die PFSA-Polymerelektrolytmembran für Bereich III. ähnlich hell wie für Bereich II. erscheint, wie auch zusätzlich unter Hinzunahme der Figur 3b ersichtlich wird.

Mit anderen Worten repräsentiert Bereich II. die Daten bzw. Informationen bzw. Bilder, die der Defekt-Informationsverarbeitungseinheit nach Umwandlung der durch die Kamera 14 erhaltenen Bilder in Graustufen, vorliegen, wenn eine herkömmliche Lichtquelle, die beispielsweise weißes Licht mit einem kontinuierlichen Lichtspektrum transmittiert und keine Wellenlängen herausgefiltert oder deren Intensität reduziert wird, zur Untersuchung der Polymerelektrolytmembranen verwendet wird. Da ein großer Anteil der Wellenlängen des Lichtspektrums der herkömmlichen Lichtquelle sowohl die Kohlenwasserstoff-Polymerelektrolytmembran, als auch die PFSA-Polymerelektrolytmembran transmittieren kann, erscheinen diese relativ "hell", wobei die Kohlenwasserstoff-Polymerelektrolytmembran, die weniger Licht als die PFSA-Polymerelektrolytmembran transmittiert, im Vergleich zur PFSA-Polymerelektrolytmembran ein wenig dunkler erschient.

Entsprechend kann aufgrund des geringen Kontrasts im dargestellten Beispiel die Defektstelle 5 für die Kohlenwasserstoff-Polymerelektrolytmembran nur schwer erkannt bzw. bestimmt werden, wohingegen die Detektion der Defektstelle 5 für die PFSA-Polymerelektrolytmembran, die das Licht für alle Wellenlängen im Wesentlichen transmittiert, eine Detektion der Defektstelle 5 nicht eindeutig möglich ist.

Bereich III. repräsentiert hingegen die Daten bzw. Informationen bzw. Bilder, die der Defekt-Informationsverarbeitungseinheit nach Umwandlung der Bilder in Graustufen vorliegen, wenn die Untersuchung der Kohlenwasserstoff-Polymerelektrolytmembran bzw. der PFSA-Polymerelektrolytmembran basierend auf Licht mit dem bestimmten Wellenlängenbereich, wobei der Untersuchungs-Wellenlängenbereich hierbei insbesondere Wellenlängen im Bereich von ca. 400 nm bzw. Wellenlängen, die kleiner als ca. 400 nm sind, beinhaltet, durchgeführt wird. Hierbei ist das Lichtspektrum insbesondere auf das Transmissionsspektrum der Kohlenwasserstoff-Polymerelektrolytmembran (vgl. Kurve T_5 in Figur 2) abgestimmt. Im vorliegenden Fall ist das Licht mit dem bestimmten Lichtspektrum für die Kohlenwasserstoff-Polymerelektrolytmembran ausgelegt.

Da für diesen Fall Wellenlängen des Transmissions-Wellenlängenbereichs im Licht reduziert oder im Wesentlichen nicht vorhanden sind, erscheint die Kohlenwasserstoff-Polymerelektrolytmembran im Vergleich zu Bereich II. (deutlich) dunkler. Daher kann, da der Defektstellen-Kontrast zwischen der Defektstelle 5 und der intakten Kohlenwasserstoff-Polymerelektrolytmembran verstärkt ist, die Defektstelle 5 der Kohlenwasserstoff-Polymerelektrolytmembran besser detektiert bzw. bestimmt werden. Dagegen erscheinen für den Fall der PFSA-Polymerelektrolytmembran - da diese auch für das Licht mit dem bestimmten Lichtspektrum für Kohlenwasserstoff-Polymerelektrolytmembranen hohe Transmissionen aufweist (vgl. Kurve T_4 in Figur 2) - die Daten bzw. das Bild in Graustufen der PFSA-Polymerelektrolytmembran im Vergleich zu Bereich II. ähnlich.

Der Defektstellen-Kontrast wird also insbesondere für den beschriebenen Fall, wenn das bestimmte Lichtspektrum im Hinblick auf das Transmissionsverhalten bzw. das Transmissionsspektrum der zu untersuchenden Polymerelektrolytmembran 2, 21 eingestellt wird, verstärkt.

Die untere Reihe der Figur 3a ist unter Berücksichtigung der vorangegangenen Erläuterungen zu verstehen, wobei hierbei das Auflösen von Defektstellen 5 für den Fall einer mit einer Katalysatorschicht 22 beschichteten Kohlenwasserstoff-Polymerelektrolytmembran und einer beschichteten PFSA-Polymerelektrolytmembran veranschaulicht ist. Es ergibt sich, dass insbesondere in Bereich III., bei dem die Untersuchung der beschichteten Kohlenwasserstoff-Polymerelektrolytmembran basierend auf dem Licht mit dem bestimmten Lichtspektrum durchgeführt wird, zwischen Defektstellen in der Polymerelektrolytmembran und Defektstellen, die lediglich in der Katalysatorschicht 22 vorliegen, besser unterschieden werden kann.

Wie weiter oben bereits ausgeführt, wird durch den erfindungsgemäße Transportstreckenabschnitt 1 bzw. insbesondere durch die Transmissionsuntersuchungseinrichtung erreicht, dass die entsprechende Polymerelektrolytmembran 2, 21 weniger Licht transmittiert bzw. dunkler erscheint, da Wellenlängen, die von der Polymerelektrolytmembran 2, 21 stark transmittiert werden bzw. die Polymerelektrolytmembran 2, 21 hell erscheinen lassen würden, im Lichtspektrum unterdrückt oder herausgefiltert sind.

Hierbei wird - durch Unterdrücken der Wellenlängen des Transmissions-Wellenlängenwellenbereichs bzw. der "hell" transmittierten Wellenlängen - der Defektstellen-Kontrast verstärkt, da die Polymerelektrolytmembran 2, 21 an den Defektstellen 5, für den Fall von den beschriebenen Defekten, wie Nadellöchern oder Kratzern, eine geringere Schichtdicke aufweist und mehr Licht oder das Licht sogar ganz bzw. im Wesentlichen vollständig durchlässt. Somit erscheinen derartige Defektstellen 5 im Vergleich zu einem intakten oder defektfreien Bereich der Polymerelektrolytmembran 2, 21 verhältnismäßig hell.

Der verstärkte Defektstellen-Kontrast, der insbesondere vorzugsweise im Vergleich zu einem Defektstellen-Kontrast bei Verwendung von herkömmlichem Licht, verstärkt ist, erlaubt Defektstellen 5 auf Polymerelektrolytmembranen 2, 21 besser aufzulösen und ermöglicht es dadurch, auf besonders effiziente Art und Weise eine Transmissionslichtuntersuchung durchzuführen.

Im Folgenden wird ergänzend näher auf Figur 2 eingegangen. Figur 2 zeigt verschiedene Transmissionsspektren T_0, T_3, T_4 und T_5. Die Transmissionsspektren wurden mittels eines Perkin Elmer Lambda 950 Spektralphotometers mit einer Ulbricht-Kugel gemessen. Hierbei wurde die Transmissionsspektren für den ultravioletten, sichtbaren und nahen infraroten Wellenlängenbereich bzw. für einen Wellenlängenbereich zwischen ca. 250 nm und 2500 nm gemessen. Gezeigt ist das experimentell gemessene Transmissionsspektrum eines Glassubstrats (Kurve T_0), einer PFSA-Polymerelektrolytmembran (Kurve T_3), einer weiteren PFSA-Polymerelektrolytmembran (Kurve T_4) und einer Kohlenwasserstoff-Polymerelektrolytmembran (Kurve T_5). Die entsprechende PFSA-Polymerelektrolytmembran (Kurve T_3) hatte eine Schichtdicke von 50 µm, die weitere PFSA-Polymerelektrolytmembran (Kurve T_4) eine Schichtdicke von 15 µm und die Kohlenwasserstoff-Polymerelektrolytmembran (Kurve T_5) eine Schichtdicke von 13 µm. Die verwendeten PFSA-Polymerelektrolytmembranen sind PFSA-basiert und weisen lediglich leichte chemische Unterschiede auf. Es ist ferner zu beachten, dass die Polymerelektrolytmembranen auf einem Glassubstrat (Kurve T_0) angeordnet waren, so dass sich die Transmission des Glassubstrats (die herkömmlicherweise für Wellenlängen unter ca. 300 nm stark abnimmt) und der entsprechenden Polymerelektrolytmembran überlagern.

Der Figur 2 kann entnommen werden, dass die beispielhaften PFSA-Polymerelektrolytmembranen (Kurve T_3 und Kurve T_4) insbesondere für den sichtbaren Wellenlängenbereich eine vergleichsweise hohe Transmission wie das Glassubstrat aufweisen, sodass diese im Wesentlichen für das Auge sowie für die Kamera 14 transparent erscheinen, wonach ein Defektstellen-Kontrast hierbei gering ist und Defekte wie Nadellöcher nur schwierig zu detektieren sind.

Dagegen weist die beispielshafte Kohlenwasserstoff-Polymerelektrolytmembran (Kurve T_5) insbesondere für den Wellenlängenbereich unter ca. 600 nm die verringerte Transmission auf, wobei beispielweise die Transmission für Wellenlängen von ca. 400 nm bei 50 % liegt. Wird die Untersuchung basierend auf Licht mit dem bestimmten Lichtspektrum, das mit einem entsprechenden Wellenlängenbereich (Untersuchungs-Wellenlängenbereich) eingerichtet ist bzw. Licht, das Wellenlängen des Untersuchungs-Wellenlängenbereichs umfasst, aufweist, durchgeführt, so erscheint die Kohlenwasserstoff-Polymerelektrolytmembran dunkler, wie wenn konventionelles bzw. weißes Licht mit einem Wellenlängenbereich zwischen 380 nm und 780 nm verwendet wird.

Dabei wird der Defektstellen-Kontrast in einem Bereich der Polymerelektrolytmembran mit einer Defektstelle dadurch erhöht, dass das Licht den Defekt bzw. die Defektstelle verstärkt und für den Fall eines Nadellochs im Wesentlichen vollständig transmittieren kann, wohingegen die Polymerelektrolytmembran das entsprechende Licht nur verringert transmittiert. Gleichzeitig wird dadurch, dass Licht mit einem Lichtspektrum verwendet wird, für die die Kohlenwasserstoff-Polymerelektrolytmembran einen Teil des Lichts durchlässt, gewährleistet, dass die Kohlenwasserstoff-Polymerelektrolytmembran nicht "vollständig dunkel" erscheint (wie beispielsweise eine mit einer Katalysatorschicht 22 beschichtete Kohlenwasserstoff-Polymerelektrolytmembran) und weiterhin beispielsweise Verschmutzungen oder Defekte, die dunkel erscheinen, aufgelöst werden können. Bei einer beschichteten Kohlenwasserstoff-Polymerelektrolytmembran kann zudem zwischen Defekten in der Kohlenwasserstoff-Polymerelektrolytmembran und Defekten, die nur in der Katalysatorschicht 22 vorliegen, unterschieden werden.

## Patentansprüche

1. Transportstreckenabschnitt (1) für den Transport und zur Untersuchung einer Polymerelektrolytmembran (2, 21), insbesondere einer Kohlenwasserstoff-Polymerelektrolytmembran, umfassend
ein Transportelement (3), das eingerichtet ist, die Polymerelektrolytmembran (2, 21) zu transportieren, und
eine Transmissionslichtuntersuchungseinrichtung, die zur Untersuchung der transportierten Polymerelektrolytmembran (2, 21) an einer Position, die die Polymerelektrolytmembran (2, 21) beim bestimmungsgemäßen Transport durchläuft, zur Auflösung von Defektstellen (5) der Polymerelektrolytmembran (2, 21) mittels durch die Polymerelektrolytmembran (2, 21) transmittierten Lichts angeordnet ist,
wobei die Transmissionslichtuntersuchungseinrichtung eingerichtet ist, die Untersuchung der Polymerelektrolytmembran (2, 21) basierend auf Licht mit einem bestimmten Lichtspektrum durchzuführen,
wobei das Lichtspektrum des Lichts in Bezug auf ein Transmissionsverhalten der zu untersuchenden Polymerelektrolytmembran (2, 21) Wellenlängen eines Untersuchungs-Wellenlängenbereichs, für den die Polymerelektrolytmembran eine verringerte Transmission aufweist, beinhaltet und zumindest eine Intensität von Wellenlängen eines Transmissions-Wellenlängenbereichs, für den die Polymerelektrolytmembran eine hohe Transmission aufweist, reduziert ist.

2. Transportstreckenabschnitt (1) gemäß Anspruch 1, wobei die Wellenlängen des Untersuchungs-Wellenlängenbereichs, für die die Polymerelektrolytmembran (2, 21) eine verringerte Transmission aufweist, Wellenlängen sind, für die die Polymerelektrolytmembran (2, 21) eine Transmission unter 80 %, bevorzugt unter 75 %, besonders bevorzugt unter 70 % aufweist, und Wellenlängen des Transmissions-Wellenlängenbereichs, für die die Polymerelektrolytmembran (2, 21) eine hohe Transmission aufweist, Wellenlängen sind, für die die Polymerelektrolytmembran (2, 21) eine Transmission über 80 %, bevorzugt über 85 %, besonders bevorzugt unter 90 %, aufweist.

3. Transportstreckenabschnitt (1) gemäß Anspruch 1 oder 2, wobei der Untersuchungs-Wellenlängenbereich Wellenlängen beinhaltet für die die Polymerelektrolytmembran (2, 21) eine Transmission zwischen 0 % und 80 %, bevorzugt 5 % und 75 %, bevorzugt zwischen 10 % und 70 %, besonders bevorzugt 20 % und 60 %, besonders bevorzugt zwischen 30 % und 55 %, besonders bevorzugt zwischen 40 % und 50 %, aufweist.

4. Transportstreckenabschnitt (1) gemäß einem der Ansprüche 1 bis 3, wobei die Intensität der Wellenlängen des Transmissions-Wellenlängenbereichs geringer ist als eine Intensität der Wellenlängen des Untersuchungs-Wellenlängenbereichs.

5. Transportstreckenabschnitt (1) gemäß einem der Ansprüche 1 bis 4, wobei das bestimmte Lichtspektrum einen Intensitätspeak für eine der Wellenlängen des Untersuchungs-Wellenlängenbereichs aufweist.

6. Transportstreckenabschnitt (1) gemäß einem der Ansprüche 1 bis 5, wobei die Transmissionslichtuntersuchungseinrichtung eine Lichtquelle (12) umfasst, die eingerichtet ist, Licht mit dem bestimmten Lichtspektrum zu emittieren.

7. Transportstreckenabschnitt (1) gemäß einem der Ansprüche 1 bis 6, wobei die Transmissionslichtuntersuchungseinrichtung einen Lichtfilter (13) umfasst, der eingerichtet ist, Wellenlängen des Transmissions-Wellenlängenbereichs derart herauszufiltern, dass das Licht das bestimmte Lichtspektrum aufweist.

8. Transportstreckenabschnitt (1) gemäß einem der Ansprüche 1 bis 7, wobei die Transmissionslichtuntersuchungseinrichtung zur Untersuchung einer Kohlenwasserstoff-Polymerelektrolytmembran bevorzugt einer Polymerelektrolytmembran auf Basis von sulfonierten Polysulfonen, sulfonierten Polyphenylenen, funktionalisierten Polybenzimidazolen oder phosphorierten Polybenzimidazolen eingerichtet ist.

9. Transportstreckenabschnitt (1) gemäß einem der Ansprüche 1 bis 8, wobei der Untersuchungs-Wellenlängenbereichs Wellenlängen kleiner 370 nm, bevorzugt kleiner 375 nm, besonders bevorzugt kleiner 380 nm, besonders bevorzugt kleiner 395 nm, besonders bevorzugt kleiner 400 nm, besonders bevorzugt kleiner 405 nm, besonders bevorzugt kleiner 420 nm, besonders bevorzugt kleiner 450 nm, besonders bevorzugt kleiner 500 nm, besonders bevorzugt kleiner 600 nm, beinhaltet.

10. Transportstreckenabschnitt (1) gemäß einem der Ansprüche 1 bis 8, wobei der Untersuchungs-Wellenlängenbereichs Wellenlängen zwischen 380 nm und 500 nm, bevorzugt zwischen 390 nm und 450 nm, besonders bevorzugt zwischen 395 nm und 420 nm, besonders bevorzugt zwischen 395 nm und 405 nm, beinhaltet.

11. Transportstreckenabschnitt (1) gemäß einem der Ansprüche 1 bis 10, wobei das Transportelement (3), insbesondere eine Transportrolle, zumindest abschnittsweise lichtdurchlässig ist und die Transmissionslichtuntersuchungseinrichtung eine/die Lichtquelle (12) und eine Lichtdetektionseinheit (14), insbesondere eine Kamera, umfasst,
wobei zumindest eine der Lichtquelle (12) oder der Lichtdetektionseinheit (14) innerhalb des Transportelements (3) angeordnet ist und das Licht zur Untersuchung der Polymerelektrolytmembran (2, 21) den lichtdurchlässigen Abschnitt des Transportelements (3) durchläuft.

12. Transportstrecke zur Beschichtung einer Polymerelektrolytmembran (2) mit einer Katalysatorschicht, insbesondere einer beschichteten Kohlenwasserstoff-Polymerelektrolytmembran, umfassend eine Beschichtungsanlage, die zum Auftragen einer Katalysatorschicht auf die Polymerelektrolytmembran (2) eingerichtet ist und einen Transportstreckenabschnitt (1) gemäß einem der Ansprüche 1 bis 11.

13. Transportstrecke gemäß Anspruch 12, wobei der Transportstreckenabschnitt (1) entlang der Transportstrecke einem Abschnitt der Transportstrecke vor der Beschichtungsanlage entspricht.

14. Transportstrecke gemäß Anspruch 12, wobei der Transportstreckenabschnitt (1) entlang der Transportstrecke einem Abschnitt der Transportstrecke nach der Beschichtungsanlage entspricht und mittels der Transmissionslichtuntersuchungseinrichtung des Transportstreckenabschnitts (1) unterschieden wird, ob ein Defekt in der Polymerelektrolytmembran (21) oder in der Katalysatorschicht (22) der beschichteten Polymerelektrolytmembran (21) vorliegt.

15. Transportstrecke gemäß Anspruch 12, wobei die Transportstrecke einen weiteren Transportstreckenabschnitt (1) gemäß einem der Ansprüche 1 bis 9 umfasst und einer der Transportstreckenabschnitte (1) entlang der Transportstrecke einem Abschnitt der Transportstrecke vor der Beschichtungsanlage entspricht und der andere Transportstreckenabschnitt (1) entlang der Transportstrecke einem Abschnitt der Transportstrecke nach der Beschichtungsanlage entspricht.
